(19) Europäisches Patentamt
European Patent Office
Office européen des brevets

(11) **EP 4 117 914 B1**

(12) **EUROPÄISCHE PATENTSCHRIFT**

(45) Veröffentlichungstag und Bekanntmachung des Hinweises auf die Patenterteilung:
**27.12.2023  Patentblatt 2023/52**

(21) Anmeldenummer: **21708659.4**

(22) Anmeldetag: **03.03.2021**

(51) Internationale Patentklassifikation (IPC):
**B32B 17/10** (2006.01)    **C03C 17/36** (2006.01)

(52) Gemeinsame Patentklassifikation (CPC):
**B32B 17/10036; B32B 17/10201; B32B 17/10229; B32B 17/1044; C03C 17/36; C03C 17/3613; C03C 17/3626; C03C 17/3639; C03C 17/3644; C03C 17/3649; C03C 17/3652; C03C 17/366; C03C 17/3681; C03C 27/10;** C03C 2217/944

(86) Internationale Anmeldenummer:
**PCT/EP2021/055332**

(87) Internationale Veröffentlichungsnummer:
**WO 2021/180544 (16.09.2021 Gazette 2021/37)**

(54) **VERBUNDSCHEIBE MIT SONNENSCHUTZBESCHICHTUNG UND WÄRMESTRAHLEN REFLEKTIERENDER BESCHICHTUNG**

COMPOUND GLAZING WITH ANTI-SUN COATING AND HEAT-REFLECTIVE COATING

VITRE EN VERRE FEUILLETÉ POURVUE DE REVÊTEMENT DE PROTECTION SOLAIRE ET DE REVÊTEMENT RÉFLÉCHISSANT LE RAYONNEMENT THERMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.03.2020  EP 20161947**

(43) Veröffentlichungstag der Anmeldung:
**18.01.2023  Patentblatt 2023/03**

(73) Patentinhaber: **Saint-Gobain Glass France**
**92400 Courbevoie (FR)**

(72) Erfinder:
• PENGEL, Stefanie
  **52072 Aachen (DE)**
• **BRONSTEIN, Yael**
  **75013 Paris (FR)**
• **HUHN, Norbert**
  **52134 Herzogenrath (DE)**
• **CAILLET, Xavier**
  **94120 Fontenay-sous-Bois (FR)**

(74) Vertreter: **Weber, Sophie**
**Saint-Gobain Sekurit Deutschland GmbH**
**SGR-Germany, Patentabteilung**
**Glasstraße 1**
**52134 Herzogenrath (DE)**

(56) Entgegenhaltungen:
**WO-A1-2013/127563     WO-A1-2019/206493**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Verbundscheibe mit einer verbesserten Sonnenschutzbeschichtung sowie deren Verwendung.

In der DE 19927683 C1 ist eine gattungsgemäße Verbundscheibe offenbart, die wenigstens zwei Glasscheiben einer diese verbindenden transparenten Zwischenschicht aufweist und weiterhin mit einer im wesentlichen Strahlen außerhalb des sichtbaren Spektrums der Sonnenstrahlung, insbesondere Infrarotstrahlen, reflektierenden Sonnenschutzschicht versehen ist, wobei die Verbundglasscheibe zusätzlich auf ihrer zu einem Innenraum hinweisenden Oberfläche mit einer weiteren, von der Sonnenschutzschicht räumlich getrennten, transparenten, im wesentlichen Wärmestrahlen reflektierenden Beschichtung (Low-E-Schicht) versehen ist. WO2013/127563 A1 offenbart eine weitere gattungsgemäße Verbundscheibe mit einer Sonnenschutzschicht zwischen den Glasscheiben und einer Low-E-Beschichtung auf der innenraumseitigen Oberfläche. Die Wärmestrahlen reflektierenden Beschichtung (Low-E-Beschichtung) ist auf Basis von Niob, Tantal, Molybdän oder Zirkonium ausgebildet.

WO 2019/206493 A1 offenbart eine weitere Verbundscheibe mit Sonnenschutzschicht.

Die WO2019/110172 A1 offenbart eine Verbundglasscheibe mit einer Außenscheibe mit einer außenseitigen Oberfläche und einer innenraumseitigen Oberfläche, eine Innenscheibe mit einer außenseitigen Oberfläche und einer innenraumseitigen Oberfläche und eine thermoplastische Zwischenschicht, welche die innenraumseitige Oberfläche der Außenscheibe mit der außenseitigen Oberfläche der Innenscheibe verbindet, wobei die Verbundscheibe zwischen der Außenscheibe und der Innenscheibe mindestens eine Sonnenschutzbeschichtung aufweist, welche im Wesentlichen Strahlen außerhalb des sichtbaren Spektrums der Sonnenstrahlung , insbesondere Infrarotstrahlen, reflektiert oder absorbiert, und wobei die Verbundglasscheibe auf der innenraumseitigen Oberfläche der Innenscheibe eine Wärmestrahlen reflektierende Beschichtung aufweist, wobei die Verbundscheibe einen Transmissionsindex A von 0,02 bis 0,08 aufweist, wobei der Transmissionsindex A (A-Wert) nach der folgenden Formel (I ) bestimmt wird

$$A— TL_{\text{Verbundglasscheibe}}/(TL/_{\text{LowE-beschichtete Scheibe}} * TE)\ (I) \ ,$$

wobei TL der Lichttransmissionsgrad, und TE die Energietransmission jeweils gemessen nach ISO 9050 ist. Mit einer solchen Verbundscheibe konnten niedrige TTS Werte von weniger als 50% in Kombination mit einer niedrigen Lichttransmission von 1-12 % erzielt werden, wobei zusätzlich die Lichtreflexion der Verbundscheibe weniger als 6% beträgt.

Die Aufgabe der vorliegenden Erfindung besteht darin, eine weiter verbesserte Verbundscheibe mit Sonnenschutz- und optionaler Wärmeschutzfunktion bereitzustellen. Insbesondere ist es die Aufgabe der Erfindung die energetischen, thermischen und optischen Eigenschaften der Verbundscheibe weiter zu verbessern. Eine weitere Aufgabe ist es gleichzeitig ein verbessertes ästhetisches Erscheinungsbild, insbesondere möglichst frei von unerwünschten Farbtönen in der Reflexion der Verbundscheibe zu erzielen.

Erfindungsgemäß wird diese und weitere Aufgaben durch eine Verbundscheibe nach dem unabhängigen Anspruch 1 gelöst. Vorteilhafte Ausgestaltungen der Erfindung ergeben sich aus den Unteransprüchen.

Die erfindungsgemäße Verbundscheibe, umfasst eine Außenscheibe mit einer außenseitigen Oberfläche (Seite I) und einer innenraumseitigen Oberfläche (Seite II), eine Innenscheibe mit einer außenseitigen Oberfläche (Seite III) und einer innenraumseitigen Oberfläche (Seite IV) und eine thermoplastische Zwischenschicht, welche die innenraumseitige Oberfläche der Außenscheibe mit der außenseitigen Oberfläche der Innenscheibe verbindet, wobei die Verbundscheibe zwischen der Außenscheibe und der Innenscheibe mindestens eine Sonnenschutzbeschichtung aufweist welche im Wesentlichen Strahlen außerhalb des sichtbaren Spektrums der Sonnenstrahlung, insbesondere Infrarotstrahlen, reflektiert oder absorbiert, wobei die Sonnenschutzbeschichtung mit einer Sicht aus Richtung der Außenscheibe eine Schichtabfolge

-   erstes dielektrisches Modul (M1),
-   erste Silberschicht (Ag1),
-   zweites dielektrisches Modul (M2),
-   zweite Silberschicht (Ag2),
-   drittes dielektrisches Modul (M3),
-   dritte Silberschicht (Ag3),
-   viertes dielektrisches Modul (M4) umfasst.

Die Silberschichten (Ag1, Ag2, Ag3) der erfindungsgemäßen Sonnenschutzbeschichtung weisen dabei zueinander eine relative Schichtdicke von Ag1/Ag2>1 und Ag1/Ag3>1 auf und die dielektrischen Module (M1, M2, M3, M4) weisen zueinander eine relative Schichtdicke M2/M1>1, M2/M3>1 und M2/M4 >1 auf.

Mit anderen Worten ist erfindungsgemäß vorgesehen, dass die Schichtdicke der ersten Silberschicht (Ag1) der Sonnenschutzbeschichtung, dicker ist als die nächsten beiden anderen Silberschichten Ag2 und Ag3, die in der Schichtabfolge der Sonnenschutzbeschichtung unterhalb der ersten Silberschicht und damit weiter von der Außenscheibe entfernt angeordnet sind. Zusätzlich ist vorgesehen, dass die Schichtdicke des zweiten dielektrischen Moduls M2 größer ist als jeweils die der anderen dielektrischen Module M1, M3 und M4.

Überraschend hat sich gezeigt, dass eine solche erfindungsgemäße Verbundglasscheibe gegenüber den bisher bekannten Verbundglasscheiben mit Sonnenschutzbeschichtung deutlich verbesserte energetische Eigenschaften und dabei gleichzeitig gute optische und ästhetische Eigenschaften aufweist, insbesondere unerwünschte Farbtöne in der Reflexion der Verbundscheibe minimiert oder sogar vermieden werden können.

Zentrales Element der erfindungsgemäßen Verbundscheibe ist dabei die Sonnenschutzbeschichtung und deren spezieller Schichtaufbau. Sonnenschutzbeschichtungen mit mehreren funktionellen Schichten ermöglichen eine hohe Reflektivität für Infrarot-Strahlung bei gleichzeitig hoher Transmission im sichtbaren Spektralbereich. Die Sonnenschutzbeschichtung weist erfindungsgemäß eine Schichtabfolge von mindestens drei funktionellen transparenten Silberschichten auf, die eine bestimmte relative Schichtdicke zueinander aufweisen. Es ist vorgesehen, dass die Schichtdicke der ersten Silberschicht (Ag1) der Sonnenschutzbeschichtung, die der Außenscheibe am nächsten angeordnet ist, dicker ist als die in der Schichtabfolge nächsten beiden Silberschichten Ag2 und Ag3, die unterhalb der ersten Silberschicht Ag1 in der Schichtabfolge der Sonnenschutzbeschichtung folgen. Die Silberschichten sind dabei jeweils zwischen dielektrischen Modulen, also dielektrischen Schichten, angeordnet.

Die Dicke jeder funktionellen Silberschicht der Sonnenschutzbeschichtung beträgt bevorzugt von 5 nm bis 25 nm, besonders bevorzugt von 8 nm bis 20 nm. Die Gesamtschichtdicke aller funktionellen Silberschichten der Sonnenschutzbeschichtung beträgt bevorzugt von 20 nm bis 80 nm, besonders bevorzugt von 30 nm bis 60 nm. In diesen Bereichen für die Dicke der funktionellen Schicht und die Gesamtdicke aller funktionellen Silberschichten werden besonders gute Ergebnisse hinsichtlich der Sonnenschutzfunktion und der Transparenz erreicht.

Unter einem dielektrischen Modul Mi (M1, M2, M3, M4), wird erfindungsgemäß eine dielektrische Schicht verstanden, die aus einer einzelnen Lage, also einer einzelnen dielektrischen Schicht, oder aus mehreren Lagen dielektrischer Schichten ausgebildet sein kann.

Die Sonnenschutzbeschichtung umfasst bevorzugt zumindest vier dielektrische Module (M1, M2, M3 und M4), also mindestens vier dielektrische Schichten. Jede funktionelle Silberschicht ist zwischen zwei dielektrischen Schichten angeordnet. Die funktionellen Schichten und die dielektrischen Schichten sind dabei so angeordnet, dass zwischen jeweils zwei benachbarten funktionellen Silberschichten, zwischen denen keine weitere funktionelle Silberschicht angeordnet ist, zumindest eine dielektrische Schicht angeordnet ist und dass oberhalb der obersten funktionellen Schicht zumindest eine weitere dielektrische Schicht angeordnet ist und dass unterhalb der untersten funktionellen Schicht zumindest eine weitere dielektrische Schicht angeordnet ist. Die dielektrischen Module weisen gemäß der Erfindung bevorzugt eine Dicke von 10 nm bis 100 nm, besonders bevorzugt von 20 nm bis 90 nm, beispielsweise zwischen 70 nm und 85 nm auf.

Die dielektrischen Schichten der Sonnenschutzbeschichtung können geeignete Materialien enthalten, beispielsweise mindestens ein Metalloxid wie ZnO, $SnO_2$, BiOs, $TiO_2$, und/oder mindestens ein Metallnitrid, wie AlN. In einer bevorzugten Ausgestaltung der erfindungsgemäßen Verbundscheibe ist vorgesehen, dass die dielektrischen Module (M1, M2, M3, M4) mindestens ein Metallnitrid, insbesondere mindestens eine Siliziumnitrid-Schicht ($Si_3N_4$) aufweisen. Die dielektrischen Module, zumindest eine Lage (Schicht) eines der dielektrischen Module, der Sonnenschutzbeschichtung enthalten mit anderen Worten bevorzugt Siliziumnitrid, oder bestehen daraus. Das Siliziumnitrid kann auch Dotierungen aufweisen, beispielsweise Aluminium.

Ist eine erste Schicht einer Beschichtung oberhalb einer zweiten Schicht einer Beschichtung der Verbundscheibe angeordnet, so bedeutet dies im Sinne der Erfindung, dass die erste Schicht näher zur Oberfläche der Außenscheibe angeordnet ist als die zweite Schicht. Ist eine erste Schicht einer Beschichtung unterhalb einer zweiten Schicht der Beschichtung angeordnet, so bedeutet dies im Sinne der Erfindung, dass die zweite Schicht weiter von der Oberfläche der Außenscheibe entfernt angeordnet ist als die erste Schicht. Ist eine erste Schicht einer Beschichtung oberhalb oder unterhalb einer zweiten Schicht der Beschichtung angeordnet, so bedeutet dies im Sinne der Erfindung nicht notwendigerweise, dass sich die erste und die zweite Schicht in direktem Kontakt miteinander befinden, es sei denn dies ist explizit so erwähnt. Es können also eine oder mehrere weitere Schichten zwischen der ersten und der zweiten Schicht angeordnet sein, sofern dies nicht explizit ausgeschlossen wird. Ist eine erste Schicht zwischen zwei weiteren Schichten angeordnet, so bedeutet dies im Sinne der Erfindung, dass die eine weitere Schicht oberhalb der ersten Schicht und die andere weitere Schicht unterhalb der ersten Schicht angeordnet ist.

Die Sonnenschutzbeschichtung kann weitere dem Fachmann an sich bekannte, Schichten umfassen, beispielsweise Glättungsschichten, Opferschichten, Barriereschichten und/oder Blockerschichten.

In einer bevorzugten Ausführungsform umfasst die Sonnenbeschichtung mindestens eine Blockerschicht. Die Blockerschicht enthält erfindungsgemäß bevorzugt zumindest Nickelchrom (NiCr) und / oder Titanchrom oder besteht daraus. Die Blockerschicht ist bevorzugt zwischen zumindest einer funktionellen Silberschicht und zumindest einer dielektrischen Schicht, angeordnet. Die Blockerschicht befindet sich bevorzugt in direktem Kontakt zu der funktionellen Silberschicht. Besonders bevorzugt befindet sich jede funktionelle Silberschicht in direktem Kontakt mit zumindest einer Blockerschicht. Es ist besonders vorteilhaft, wenn jede funktionelle Silberschicht zwischen zwei Blockerschichten angeordnet ist, wobei sich die funktionelle Schicht bevorzugt in direktem Kontakt zu den beiden sie umgebenden, oberhalb und unterhalb angeordneten Blockerschichten befindet. Durch die Blockerschicht wird ein Schutz der funktionellen Schicht bei Erwärmung, insbesondere während der Herstellung der erfindungsgemäßen Verbundscheibe erreicht. Die Dicke der Blockerschichten liegt bevorzugt in der Größenordnung einiger Nanometer und beträgt beispielsweise von 0,1 nm bis 3 nm. Die Blockerschicht kann bevorzugt eine Dicke von weniger als 1 nm, beispielsweise von 0,1 nm, 0,2 nm, 0,3 nm, 0,4 nm, 0,5 nm, 0,6 nm, 0,7 nm, oder 0,8 nm aufweisen.

Die Verbundscheibe ist dafür vorgesehen, in einer Fensteröffnung einen Innenraum, insbesondere den Innenraum eines Fahrzeugs, gegenüber der äußeren Umgebung abzutrennen. Die Verbundscheibe ist ein Laminat und umfasst eine erste und eine zweite Glasscheibe, die im Sinne der Erfindung als Außenscheibe und Innenscheibe bezeichnet werden und über eine thermoplastische Zwischenschicht miteinander verbunden sind. Mit Innenscheibe wird im Sinne der Erfindung die in Einbaulage dem Innenraum zugewandte Scheibe bezeichnet. Mit Außenscheibe wird die in Einbaulage der äußeren Umgebung zugewandte Scheibe bezeichnet. Unter der innenraumseitigen Oberfläche (oder Innenseite oder Innenfläche) wird im Sinne der Erfindung diejenige Oberfläche der Scheiben verstanden, in Einbaulage dem Innenraum zugewandt ist. Unter der außenseitigen Oberfläche (oder Außenseite oder Außenfläche) wird im Sinne der Erfindung diejenige Oberfläche der Scheiben verstanden, in Einbaulage der äußeren Umgebung zugewandt ist.

Die Oberflächen der Scheiben werden typischerweise wie folgt bezeichnet: Die Außenseite der Außenscheibe wird als Seite I bezeichnet. Die Innenseite der Außenscheibe wird als Seite II bezeichnet. Die Außenseite der Innenscheibe wird als Seite III bezeichnet. Die Innenseite der Innenscheibe wird als Seite IV bezeichnet.

Die Außenscheibe und die Innenscheibe sind bevorzugt unabhängig voneinander aus Glas oder Kunststoff ausgebildet, bevorzugt Kalk-Natron-Glas, Alkalialuminosilikatglas, Polycarbonat oder Polymethacrylat. In einer besonders bevorzugten Ausgestaltung bestehen die Außenscheibe und die Innenscheibe aus Glas.

Geeignete Glasscheiben umfassen Glasscheiben, die unter den Handelsnamen Planiclear® und Planilux® (jeweils Klarglas), VG 10, VG20, VG40 oder TSANx, TSA3+, TSA4+ von Saint-Gobain bekannt sind, wobei es sich bei den Gläsern der VG-Serie um graugefärbte Gläser und bei denen der TSA-Serie um grüngefärbte Gläser handelt.

Die Außen- und/oder die Innenscheibe weist vorzugsweise unabhängig voneinander eine Dicke von 0,1 bis 4 mm, bevorzugt von 1 bis 4 mm, besonders bevorzugt von 1,6 mm bis etwa 2,1 mm auf.

Die innenraumseitige Oberfläche der Außenscheibe und die außenseitige Oberfläche der Innenscheibe sind einander zugewandt und mittels der thermoplastischen Zwischenschicht miteinander verbunden.

Die thermoplastische Zwischenschicht ist durch eine oder mehrere thermoplastische Folien ausgebildet, wobei in der resultierenden Verbundscheibe gegebenenfalls die einzelnen Folien in der resultierenden Zwischenschicht nicht mehr voneinander unterschieden werden können. Die thermoplastischen Folien enthalten bevorzugt Polyvinylbutyral (PVB), Ethylenvinylacetat (EVA), Polyurethan (PU) und/oder Gemische davon und/oder Copolymere davon, besonders bevorzugt Polyvinylbutyral. Die Folien sind bevorzugt auf Basis der genannten Materialien ausgebildet, können aber weitere Bestandteile enthalten, beispielsweise Weichmacher, Farbmittel, IR- oder UV-Absorber.

Die einzelnen Polymerfolien der Zwischenschicht, insbesondere die PVB-Folien, haben vorzugsweise eine Dicke von etwa 0,2 mm bis 1 mm, beispielsweise 0,38 mm, 0,76 mm oder 0,81 mm. Über die Dicke der Folien können weitere Eigenschaften der Verbundglasscheibe beeinflusst werden. So bewirken etwa dickere PVB-Folien eine verbesserte Schalldämpfung, insbesondere wenn sie einen akustisch wirksamen Kern enthalten, einen erhöhten Einbruchswiderstand der Verbundglasscheibe und auch einen erhöhten Schutz gegen ultraviolette Strahlung (UV- Schutz).

In einer weiter bevorzugten Ausgestaltung der erfindungsgemäßen Verbundscheibe ist vorgesehen, dass die Silberschichten der Sonnenschutzbeschichtung (Ag1, Ag2, Ag3) eine relative Schichtdicke von Ag1/Ag2 >1 und 1<Ag1/Ag3<3, bevorzugt eine relative Schichtdicke von 1<Ag1/Ag3<2,6 aufweisen. Mit anderen Worten ist die Dicke der ersten Silberschicht größer als die der zweiten Silberschicht und die relative Schichtdicke der ersten Silberschicht zur dritten Silberschicht liegt zwischen 1 und 3, bevorzugt zwischen 1 und 2,6. Mit Einstellung dieser relativen Schichtdicken der funktionellen Silberschichten konnten die energetischen und optischen Eigenschaften nochmals verbessert und optimiert werden, wobei gleichzeitig ein optimales ästhetisches Erscheinungsbild ohne unerwünschte Farbtöne in der Reflexion der Verbundscheibe erzielt werden kann. Insbesondere können unerwünschte rote und gelbe Reflexionen oder Trübungen der Verbundscheibe vermieden werden.

Zusätzlich kann der visuelle Komfort der resultierenden Verbundglasscheibe verbessert, beziehungsweise gegenüber dem bisher bekannten Verbundscheiben, bei verbessertem thermischem Komfort auf einem guten Wert gehalten werden.

In einer anderen Ausgestaltung der erfindungsgemäßen Verbundscheibe ist vorgesehen, dass die zweite und die dritte Silberschicht (Ag2, Ag3) der Sonnenschutzbeschichtung eine relative Schichtdicke von 0,5<Ag2/Ag3<2.0 zueinander aufweisen.

In einer anderen bevorzugten Ausführungsform ist vorgesehen, dass die dielektrischen Module (M1, M2, M3, M4) eine relative Schichtdicke von M2/M 1 > 1, M2/M3>1,1 und M2/M4 >1,5 aufweisen.

Die Sonnenschutzbeschichtung ist erfindungsgemäß zwischen der Außenscheibe und der Innenscheibe angeordnet. Die Sonnenschutzbeschichtung ist in einer bevorzugten Ausgestaltung auf der innenraumseitigen Oberfläche der Außenscheibe (Seite II) aufgebracht.

In einer weiteren bevorzugten Ausgestaltung ist die Sonnenschutzbeschichtung in die thermoplastische Zwischenschicht eingelagert. Die Sonnenschutzbeschichtung kann auf einer thermoplastischen Folie aufgebracht sein. In einer bevorzugten Ausgestaltung ist die Sonnenschutzbeschichtung auf einer Trägerfolie aufgebracht, welche in der Herstellung der Verbundscheibe beispielsweise zwischen zwei thermoplastischen Folien angeordnet wird, die zur Ausbildung der Zwischenschicht dienen. Die thermoplastische Zwischenschicht der Verbundscheibe enthält eine Trägerfolie, welche oberhalb, also auf der zur Außenscheibe gerichteten Oberfläche, die Sonnenschutzbeschichtung aufweist. Die Trägerfolie enthält bevorzugt Polyethylenterephthalat (PET) oder besteht daraus und weist eine Dicke von 20 $\mu$m bis 100 $\mu$m auf, vorzugsweise 38 $\mu$m bis 86 $\mu$m, beispielsweise etwa 50 $\mu$m. Die Trägerfolie kann aber auch aus anderen geeigneten Kunststoffen gefertigt sein.

In einer weiteren bevorzugten Ausgestaltung ist die Sonnenschutzbeschichtung auf der außenseitigen Oberfläche III der Innenscheibe aufgebracht.

In einer bevorzugten Ausführungsform kann die Verbundscheibe auf der innenraumseitigen Oberfläche (Seite IV) der Innenscheibe eine Wärmestrahlen-reflektierende Beschichtung (Low-E-Beschichtung) aufweisen. Die Verbundscheiben können erfindungsgemäß dann eine besonders niedrige totale transmittierte Wärmestrahlung (TTS) von weniger als 14%, insbesondere weniger als 13% (gemessen nach ISO13837), aufweisen, wobei gleichzeitig ein optimales ästhetisches Erscheinungsbild ohne unerwünschte Farbtöne in der Reflexion der Verbundscheibe erzielt werden kann. Insbesondere können unerwünschte rote und gelbe Reflexionen oder Trübungen der Verbundscheibe vermieden werden.

Erfindungsgemäß kann auf der Innenseite der Innenscheibe (Seite IV), also optional eine die Wärmestrahlen-reflektierende Beschichtung aufgebracht sein, die die Performance der Verbundscheibe mit der Sonnenschutzbeschichtung hinsichtlich der möglichen TTS Werte gegenüber den bisher bekannten Verbundscheiben verbessert.

Solche Beschichtungen sind beispielsweise aus der WO2013/131667A1 bekannt. Die Wärmestrahlen reflektierende Beschichtung kann auch als Wärmeschutzbeschichtung, Beschichtung niedriger Emissivität, emissivitätsmindernde Beschichtung, Low-E-Beschichtung oder Low-E-Schicht bezeichnet werden. Sie hat die Aufgabe, Wärmestrahlung zu reflektieren, also insbesondere IR-Strahlung, die länger wellig ist als der IR-Anteil der Sonnenstrahlung. Bei niedrigen Außentemperaturen reflektiert die Low-E-Beschichtung Wärme in den Innenraum zurück und vermindert die Auskühlung des Innenraums. Bei hohen Außentemperaturen reflektiert die Low-E-Beschichtung zusätzlich zu der Sonnenschutzbeschichtung die thermische Strahlung der erwärmten Verbundscheibe nach außen und vermindert die Aufheizung des Innenraums. Zusammen mit der erfindungsgemäßen Sonnenschutzbeschichtung, verringert die Low-E-Beschichtung besonders effektiv im Sommer die Aussendung von Wärmestrahlung der Scheibe in den Innenraum und im Winter die Abstrahlung von Wärme in die äußere Umgebung.

Gemäß der Erfindung sind bisher, beispielsweise aus der WO2013/127563 A1 oder WO2019/110172 A1, bekannte Wärmestrahlen-reflektierende Beschichtungen geringer Emissivität beispielsweise geeignet um in der Verbundscheibe gemäß der Erfindung eingesetzt zu werden. Es kann mit einer Kombination der erfindungsgemäßen Sonnenschutzbeschichtung und einer Low-E-Beschichtung für die Verbundscheibe ein Lichttransmissionsgrad (TL) sichtbaren Lichts bei verbesserten energetischen Werten (TTS <14 %) von 1-12 %, bevorzugt zwischen 5% und 10% erzielt werden.

Die Wärmestrahlen reflektierende Beschichtung der Verbundscheibe umfasst bevorzugt eine funktionelle Schicht, welche ein transparentes leitfähiges Oxid (TCO), enthält, bevorzugt Indiumzinnoxid (ITO), oder ZinnOxid (SnO2), welche zwischen dielektrischen Schichten angeordnet sind. Die dielektrischen Schichten, können insbesondere aus dielektrischen Oxiden oder Nitriden gebildet sein, wie ZnO, SnZnO, AIN, TiO2, $SiO_2$ oder $Si_3N_4$.

Die funktionelle Schicht der Low-E-Beschichtung kann aber auch andere, elektrisch leitfähige Oxide enthalten, beispielsweise Fluor-dotiertes Zinnoxid (SnO2: F), Antimondotiertes Zinnoxid ($SnO_2$:Sb), Indium-Zink-Mischoxid (IZO), Gallium-dotiertes oder Aluminium-dotiertes Zinkoxid, Niobiumdotiertes Titanoxid, Cadmiumstannat und/oder Zinkstannat. Damit werden besonders gute Ergebnisse hinsichtlich der Emissivität und der Biegbarkeit dieser Beschichtung erreicht.

In einer Ausgestaltung der Erfindung weist die Low-E-Beschichtung eine Emissivität von höchstens 50%, bevorzugt höchstens 30 % auf. Mit anderen Worten ist auch bevorzugt, dass die innenraumseitige Emissivität der erfindungsgemäßen Verbundscheibe bevorzugt kleiner oder gleich 50%, besonders bevorzugt von 10% bis 50%, ganz besonders bevorzugt von 20% bis 35%, beispielsweise kleiner oder gleich 30% beträgt. Mit innenraumseitiger Emissivität wird dabei das Maß bezeichnet, welches angibt, wie viel Wärmestrahlung die Scheibe mit der Low-E-Beschichtung in Einbaulage im Vergleich zu einem idealen Wärmestrahler (einem schwarzen Körper) in einen Innenraum, beispielsweise eines Gebäudes oder eines Fahrzeugs abgibt. Unter Emissivität wird im Sinne der Erfindung der normale Emissionsgrad bei 283 K nach der Norm EN 12898 verstanden.

Erfindungsgemäß weist die Verbundglasscheibe eine externe energetische Reflexion RE> 36%, bevorzugt von RE > 39% auf. Eine Berechnung des energetischen Wertes RE erfolgt gemäß der Norm ISO 9050.

In einer Ausgestaltung der erfindungsgemäßen Verbundglasscheibe weist diese ein außenseitiges Reflexionsvermögen (sichtbare externe Reflexion RLext) von RLext > 8 %, bevorzugt zwischen 10% und 22%, auf, bei Verwendung eines normgerechten A-Strahlers bei einem Einfallswinkel von 2°. Eine Berechnung des optischen Wertes RLext erfolgt gemäß der Norm EN 410 mit Lichtart A.

Ein außenseitiges Reflexionsvermögen beschreibt dabei den reflektierten Anteil der von der äußeren Umgebung einfallenden sichtbaren Strahlung.

Die Erfindung umfasst weiter ein Verfahren zur Herstellung einer erfindungsgemäßen Verbundscheibe mit einer Sonnenschutzbeschichtung, welches die folgenden Verfahrensschritte umfasst.

- Aufbringen einer Sonnenschutzbeschichtung auf die Innenfläche (II) der Außenscheibe, oder auf die Außenfläche (III) der Innenscheibe, oder Einbringen der Sonnenschutzbeschichtung in die thermoplastische Zwischenschicht;

- und

- Verbinden der Außenscheibe und der Innenscheibe über die thermoplastische Zwischenschicht.

In einer weiteren Ausführungsform des Verfahrens ist als ein weiterer Schritt das Aufbringen einer Wärmeschutzbeschichtung auf die Innenfläche (IV) der Innenscheibe vorgesehen.

Das Aufbringen der Sonnenschutzbeschichtung kann zeitlich vor, zeitlich nach oder gleichzeitig mit dem Aufbringen der Wärmestrahlen reflektierenden Beschichtung erfolgen. Das Verbinden von Außenscheibe und Innenscheibe zum Verbundglas erfolgt, nachdem sowohl die Sonnenschutzbeschichtung als auch die Wärmeschutzbeschichtung aufgebracht worden sind.

Sowohl die Sonnenschutzbeschichtung 4 als auch die Wärmeschutzbeschichtung 5 sind thermisch hoch belastbar, so dass sie auch eine Temperaturbehandlung oder ein Biegen der Scheiben 1, 2 bei Temperaturen von typischerweise mehr als 600 °C ohne Beschädigung überstehen.

Die einzelnen Schichten der Sonnenschutzbeschichtung sowie der Wärmestrahlen-reflektierenden Beschichtung können durch an sich bekannte Verfahren, bevorzugt durch magnetfeldunterstützte Kathodenzerstäubung abgeschieden und in den geeigneten Schichtdicken und Schichtabfolgen aufgebaut werden. Die Kathodenzerstäubung kann in einer Schutzgasatmosphäre erfolgen, beispielsweise aus Argon, oder in einer Reaktivgasatmosphäre, beispielsweise durch Zugabe von Sauerstoff oder Stickstoff. Die einzelnen Schichten können aber auch durch andere geeignete, dem Fachmann bekannte Verfahren, beispielsweise Aufdampfen oder chemische Gasphasenabscheidung aufgebracht werden.

Die thermoplastische Zwischenschicht kann in Form einer thermoplastischen Folie bereitgestellt werden. Die thermoplastische Zwischenschicht kann aber auch in Form mehrerer Folien, beispielsweise zweier oder mehrerer thermoplastischen Folien, gegebenenfalls einer zusätzlichen Trägerfolie. Das Aufbringen der Sonnenschutzbeschichtung auf die thermoplastische Zwischenschicht beinhaltet dabei nur das Aufbringen der Sonnenschutzbeschichtung auf eine der Folien, beispielsweise auf die Trägerfolie. Die Trägerfolie mit einer darauf angeordneten Sonnenschutzbeschichtung wird beim Verbinden der Scheibe zum Verbundglas bevorzugt zwischen zwei thermoplastischen Folien angeordnet, wobei die Fläche der Sonnenschutzbeschichtung der Außenscheibe zugewandt ist.

Das Verbinden der Außenscheibe und der Innenscheibe über die thermoplastische Zwischenschicht zur Verbundscheibe erfolgt bevorzugt durch Laminieren unter Einwirkung von Hitze, Vakuum und/oder Druck. Es können an sich bekannte Verfahren zur Herstellung einer Verbundscheibe verwendet werden. Beim Laminieren fließt das erhitzte, fließfähige thermoplastische Material um die Sonnenschutzbeschichtung herum, so dass ein stabiler Verbund hergestellt wird und die Sonnenschutzbeschichtung in die Zwischenschicht eingekapselt und vor Beschädigung und Umwelteinflüssen geschützt wird.

Es können beispielsweise sogenannte Autoklavverfahren bei einem erhöhten Druck von etwa 10 bar bis 15 bar und Temperaturen von 130 °C bis 145 °C über etwa 2 Stunden durchgeführt werden. An sich bekannte Vakuumsack- oder Vakuumringverfahren arbeiten beispielsweise bei etwa 200 mbar und 80°C bis 110 °C. Die Außenscheibe, die thermoplastische Zwischenschicht und die Innenscheibe können auch in einem Kalander zwischen mindestens einem Walzenpaar zu einer Scheibe verpresst werden. Anlagen dieser Art sind zur Herstellung von Scheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die Scheiben innerhalb von beispielsweise etwa 60 Minuten bei verminderten Drücken von 0,01 mbar bis 800 mbar und Temperaturen von 80°C bis 170°C laminiert werden.

Die Erfindung umfasst weiterhin die Verwendung der erfindungsgemäßen Verbundscheibe mit Sonnenschutzbeschichtung und einer Low-E-Beschichtung in Fortbewegungsmitteln für den Verkehr auf dem Lande, in der Luft oder zu Wasser, insbesondere in Kraftfahrzeugen, beispielsweise als Windschutzscheibe, Heckscheibe, Seitenscheibe und/oder Dachscheibe, sowie als funktionales Einzelstück, und in Gebäuden.

Alle genannten Normen beziehen sich auf deren zum Anmeldetag gültige Fassung.

Die verschiedenen Ausgestaltungen der Erfindung können einzeln oder in beliebigen Kombinationen realisiert sein. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der Erfindung zu verlassen. Es sei denn Ausführungsbeispiele und/oder ihre Merkmale sind explizit nur als Alternativen genannt oder schließen sich aus.

Nachfolgend wird die Erfindung eingehender unter Bezugnahme auf die Figuren dargestellt. Dabei ist anzumerken, dass unterschiedliche Aspekte beschrieben werden, die jeweils einzeln oder in Kombination zum Einsatz kommen können. D.h. jeglicher Aspekt kann mit unterschiedlichen Ausführungsformen der Erfindung verwendet werden, soweit nicht explizit als reine Alternative dargestellt.

Die Zeichnungen sind vereinfachte, schematische Darstellungen und nicht maßstabsgetreu. Die Zeichnungen schränken die Erfindung in keiner Weise ein.

Es zeigen:

Fig. 1 einen Querschnitt durch eine erste Ausgestaltung der erfindungsgemäßen Verbundscheibe mit Sonnenschutzschicht- und Wärmestrahlen-reflektierender Schicht,

Fig. 2 einen Querschnitt durch eine weitere Ausgestaltung der erfindungsgemäßen Verbundscheibe mit Sonnenschutzschicht - und Wärmestrahlen-reflektierender Schicht,

Fig. 3 einen Querschnitt durch eine weitere Ausgestaltung der erfindungsgemäßen Verbundscheibe mit Sonnenschutz- und Wärmeschutzfunktion,

Fig. 4 eine schematische Darstellung des Aufbaus einer erfindungsgemäßen Sonnenschutzschicht aufgebracht auf die Außenscheibe der Verbundscheibe;

Fig. 5 ein Ausführungsbeispiel des erfindungsgemäßen Verfahrens anhand eines Flussdiagramms.

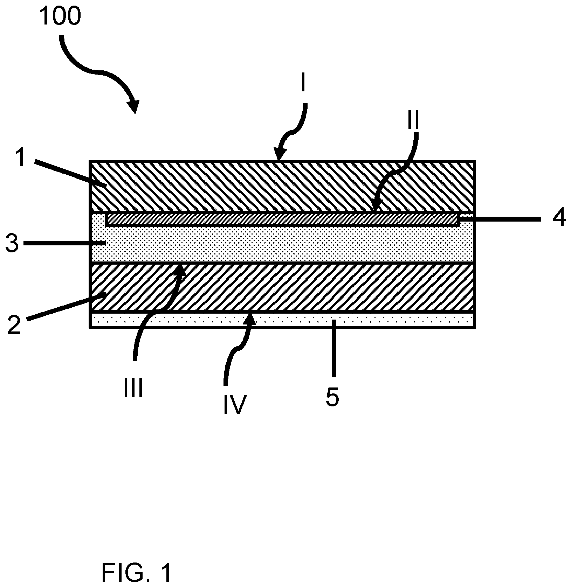

Fig. 1 zeigt einen Querschnitt durch eine Ausgestaltung der erfindungsgemäßen Verbundscheibe 100 mit einer Sonnenschutzbeschichtung 4 und einer Low-E-Beschichtung 5. Die Verbundscheibe 100 umfasst eine Außenscheibe 1 und eine Innenscheibe 2, die über eine thermoplastische Zwischenschicht 3 miteinander verbunden sind. Die Verbundscheibe 100 kann beispielsweise eine Größe von etwa 1 m$^2$ aufweisen und als Dachscheibe eines Personenkraftwagens vorgesehen sein, wobei die Außenscheibe 1 der äußeren Umgebung und die Innenscheibe 2 dem Fahrzeuginnenraum zugewandt ist. Die Außenscheibe 1 weist eine Außenfläche (I) und eine Innenfläche (II) auf. Die Innenscheibe 2 weist eine Außenfläche (III) und eine Innenfläche (IV) auf. Die Außenflächen (I) und (III) sind der äußeren Umgebung zugewandt, die Innenflächen (II) und (IV) sind dem Fahrzeuginnenraum zugewandt. Die Innenfläche (II) der Außenscheibe 1 und die Außenfläche (III) der Innenscheibe 2 sind einander zugewandt.

Auf der Innenfläche (II) der Außenscheibe 1 ist in dieser Ausführungsform eine erfindungsgemäße Sonnenschutzbeschichtung 4 angeordnet. Die Sonnenschutzbeschichtung 4 erstreckt sich über die gesamte Innenfläche (II), bevorzugt abzüglich eines umlaufenden rahmenförmigen beschichtungsfreien Bereichs, beispielsweise mit einer Breite von 8 mm. Der beschichtungsfreie Bereich kann dann durch Verkleben mit der thermoplastischen Zwischenschicht 3 hermetisch versiegelt sein. Die Sonnenschutzbeschichtung 4 ist dadurch vorteilhaft vor Beschädigungen und Korrosion geschützt.

Die Sonnenschutzbeschichtung 4 umfasst erfindungsgemäß zumindest drei funktionelle Silberschichten, welche jeweils eine Schichtdicke zwischen 5 nm und 20 nm aufweisen, wobei jede funktionelle Silberschicht zwischen dielektrischen Modulen, beispielsweise Schichten aus Siliziumnitrid angeordnet ist. Die Silberschichten (Ag1, Ag2, Ag3) der erfindungsgemäßen Sonnenschutzbeschichtung weisen dabei zueinander eine relative Schichtdicke von Ag1/Ag2>1 und Ag1/Ag3>1 auf und die dielektrischen Module (M1, M2, M3, M4) weisen zueinander eine relative Schichtdicke M2/M1>1, M2/M3>1 und M2/M4 >1 auf.

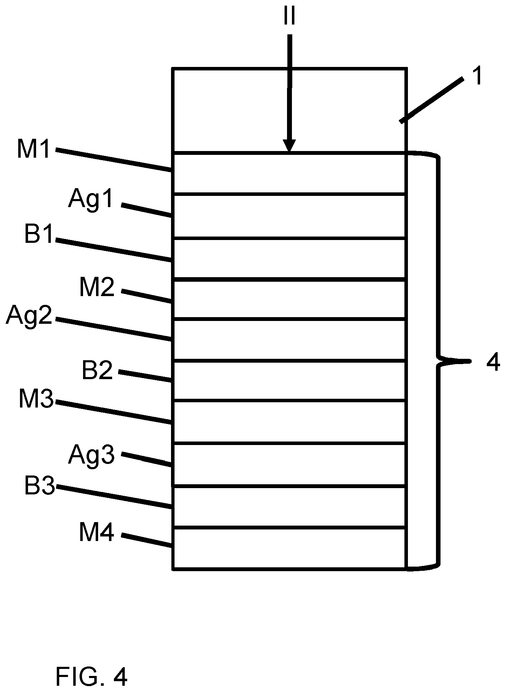

Die Sonnenschutzbeschichtung 4 kann zusätzlich weitere Schichten, wie zum Beispiel Opferschichten, Barriereschichten, Glättungsschichten oder Blockerschichten aufweisen. Solche Schichten können beispielsweise die Sonnenschutzbeschichtung 4 vor Umwelteinflüssen, beispielsweise vor Oxidation, schützen und deren Haltbarkeit und Umweltbeständigkeit verbessern. Der erfindungsgemäße Aufbau der Sonnenschutzbeschichtung 4 wird nachfolgend noch zu der Figur 4 näher erläutert. Die Sonnenschutzbeschichtung 4 führt zu einer verringerten Aufheizung des Fahrzeuginnenraums und der Innenscheibe 2 aufgrund der Reflexion von infraroter Strahlung. Es kann erfindungsgemäß eine energetische Reflexion RE > 36%, bevorzugt > 39 % erzielt werden. Zusätzlich werden mit der erfindungsgemäßen Sonnenschutzbeschichtung 4 neben einem guten, gegenüber bisher bekannten Systemen, verbesserten thermischen Komfort gleichzeitig auch gute optische und ästhetischen Eigenschaften der Verbundscheibe 100 erzielt.

Auf der Innenfläche (IV) der Innenscheibe 2 ist optional eine Wärmeschutzbeschichtung 5 angeordnet. In dieser bevorzugten Ausführungsform ist es möglich, dass die Verbundscheibe nicht nur eine gute energetische Reflexion RE >39%, sondern auch eine besonders niedrige totale transmittierte Wärmestrahlung von TTS< 14%, bevorzugt < 13% aufweisen kann. Die Wärmeschutzbeschichtung 5 verringert einerseits die Abstrahlung von Wärmestrahlung durch die Verbundscheibe 100 in den Fahrzeuginnenraum, insbesondere bei hohen Außentemperaturen. Die Wärmeschutzbeschichtung 5 kann andererseits die Abstrahlung von Wärmestrahlung aus dem Fahrzeuginnenraum bei niedrigen Außentemperaturen verringern. Zudem kann die Wärmeschutzbeschichtung 5 die Transmission von sichtbarem Licht in den Fahrzeuginnenraum verringert, so dass keine oder in einem geringeren Maße getönte Scheibe verwendet werden müssen, wenn eine solche verringerte Transmission erwünscht ist, beispielsweise bei Dachscheiben. Das sind große Vorteile der erfindungsgemäßen Verbundscheibe, da das Raumklima des Fahrzeuginnenraums deutlich verbessert wird und die Notwendigkeit des Einsatzes von Klimaanlagen vermindert wird. Hinsichtlich der energetischen Performance, insbesondere eine energetische Reflexion RE >36 und einen möglichst niedrigen TTS Wert der resultierenden Verbundscheibe 100 zu erreichen, ist es erfindungsgemäß bevorzugt, die Sonnenschutzbeschichtung 4 auf einer klaren, ungetönten Glasscheibe (Innenseite II der Außenscheibe 1) aufzubringen. Um das äußere Escheinungsbild der Verbundscheibe 100 gegebenenfalls zu neutralisieren, beziehungsweise zu verbessern, kann es andererseits sinnvoll sein die Sonnenschutzbeschichtung 4 auf einer getönten Glasscheibe (Außenscheibe 1) aufzubringen.

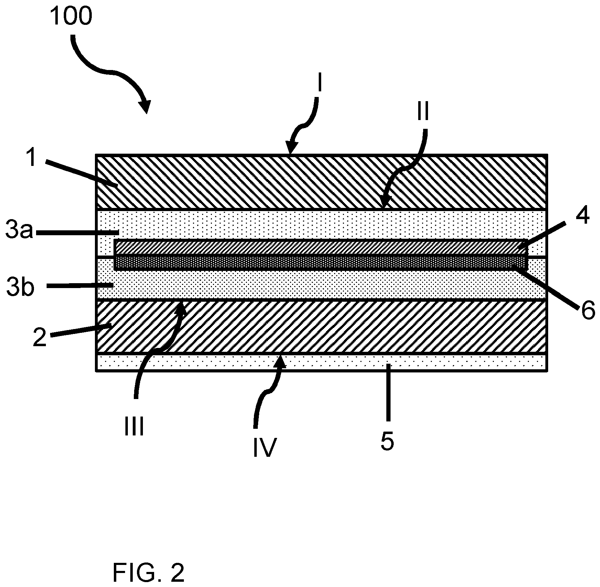

Fig. 2 zeigt einen Querschnitt durch eine weitere Ausgestaltung der erfindungsgemäßen Verbundscheibe 100 mit Sonnenschutz- und Wärmeschutzbeschichtung 4, 5. Im Unterschied zur Figur 1 ist die Sonnenschutzbeschichtung 4 nicht auf der Innenfläche (II) der Außenscheibe 1 angeordnet, sondern auf einer Trägerfolie 6 in der Zwischenschicht 3. Die Trägerfolie 6 enthält oder besteht bevorzugt aus Polyethylenterephthalat (PET) und weist beispielsweise eine Dicke von 50 μm auf. Die erfindungsgemäße Sonnenschutzschicht 4 umfasst einen Schichtaufbau, der näher zu Figur 4 erläutert wird. Die Trägerfolie 6 mit der Sonnenschutzbeschichtung 4 ist zwischen einer ersten thermoplastischen Folie 3a und einer zweiten thermoplastischen Folie 3b angeordnet. Die thermoplastischen Folien 3a und 3b sowie die Trägerschicht 6 bilden in der resultierenden Verbundscheibe die thermoplastische Zwischenschicht 3. Die thermoplastischen Folie 3a und 3b enthalten oder bestehen bevorzugt aus PVB und weisen beispielsweise eine Schichtdicke von 0,38 mm auf. Die Trägerfolie 6 weist eine etwas geringere Größe auf als die Außenscheibe 1, die Innenscheibe 2 und die thermoplastischen Folien 3a und 3b. Die Trägerfolie 6 ist so in dem Verbund angeordnet, dass sich die Trägerfolie 6 nicht bis zu den seitlichen Rändern des Verbundglases erstreckt. Die Trägerfolie 6 ist dadurch im Randbereich der Verbundscheibe beispielsweise mit einer Breite von etwa 8 mm umlaufend von den thermoplastischen Folien 3a und 3b umgeben. Die Sonnenschutzbeschichtung 4 auf der Trägerfolie 6 ist somit vorteilhaft vor Beschädigungen und insbesondere Korrosion geschützt. Die Wärmeschutzbeschichtung 5 auf der Innenfläche (IV) der Innenscheibe 2 ist wie in Figur 1 ausgestaltet.

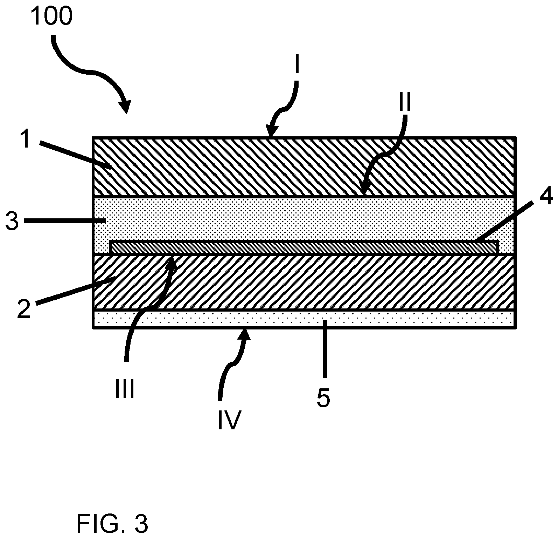

Fig. 3 zeigt einen Querschnitt durch eine weitere Ausgestaltung der erfindungsgemäßen Verbundscheibe 100 mit Sonnenschutz- und Wärmeschutzbeschichtung 5, 4. Im Unterschied zur Figur 1 ist die Sonnenschutzbeschichtung 4 nicht auf der Innenfläche (II) der Außenscheibe 1 angeordnet, sondern auf der Außenfläche (III) der Innenscheibe 2, wobei ein umlaufender Randbereich der Außenfläche (III) nicht mit der Sonnenschutzbeschichtung 4 versehen ist. Die Sonnenschutzbeschichtung 4 ist auch in dieser Ausgestaltung vorteilhaft vor Beschädigungen und Korrosion geschützt. Im Weiteren entspricht diese Ausführungsform der in Figur 1 gezeigten Ausgestaltung.

Figur 4 zeigt einen schematischen Aufbau einer erfindungsgemäßen Sonnenschutzschicht 4. In der gezeigten Ausgestaltung ist die Sonnenschutzbeschichtung 4 auf der Innenseite II Außenscheibe 1 als Substrat aufgebracht. Die gezeigte Sonnenschutzbeschichtung 4 enthält drei transparente funktionelle Silberschichten Ag1, Ag2 und Ag3, die insbesondere die Infrarotstrahlenreflektierenden Schichten sind. Erfindungsgemäß weisen diese funktionellen Silberschichten eine bestimmte relative Dicke zueinander auf, im Speziellen ist erfindungsgemäß vorgesehen, dass die relativen Schichtdicken Ag1/Ag2>1 und Ag1/Ag3>1 betragen. Mit anderen Worten ist die Schichtdicke der ersten, der Außenscheibe 1 am nächsten angeordnete Silberschicht Ag1 dicker als die in der Schichtabfolge unterhalb folgenden zweiten Ag2 und der dritten Silberschicht Ag3. Die Silberschichten können beispielsweise mittels Kathodenzerstäubung in einer Argonatmosphäre abgeschieden werden.

Oberhalb und unterhalb der Silberschichten Ag1, Ag2 und Ag3 sind jeweils dielektrische Schichten, bzw. dielektrische Module M1, M2, M3 und M4 angeordnet. Diese dielektrischen Module (M1, M2, M3, M4) weisen erfindungsgemäß zueinander eine relative Schichtdicke M2/M1>1, M2/M3>1 und M2/M4 >1 auf. Das dielektrische Modul M1 ist also oberhalb der ersten Silberschicht Ag1 direkt auf der Innenseite II der Außenscheibe 1 angeordnet, das zweite dielektrische Module M2 ist unterhalb der ersten Silberschicht Ag1 angeordnet. Das erste dielektrische Modul M1 kann beispielsweise ausgehend von der Außenscheibe 1 als eine Schichtabfolge von Siliziumnitrid-, ZnSnOx- und ZnO-Schichten aufgebaut sein. Die Siliziumnitrid-Schicht kann dabei aus Siliziumnitrid in einer Stickstoffhaltigen Atmosphäre abgeschieden werden, die Zinkoxidschicht aus Zinkoxid in einer sauerstoffhaltigen Atmosphäre.

Die Sonnenbeschichtung 4 enthält mindestens eine Blockerschicht, besonders bevorzugt befindet sich jede funktionelle Silberschicht Ag1, Ag2 Ag3 wie gezeigt in direktem Kontakt mit zumindest einer Blockerschicht B1, B2 und B3. Die Blockerschichten enthalten erfindungsgemäß bevorzugt zumindest Nickel, Chrom oder Legierungen hiervon und / oder Titanchrom oder besteht daraus. Die Blockerschichten B (B1, B2, B3) sind bevorzugt zwischen zumindest einer funktionellen Silberschicht und zumindest einer dielektrischen Schicht, angeordnet. Durch die Blockerschichten B wird ein Schutz der funktionellen Schicht bei Erwärmung, insbesondere während der Herstellung der erfindungsgemäßen Verbundscheibe erreicht.

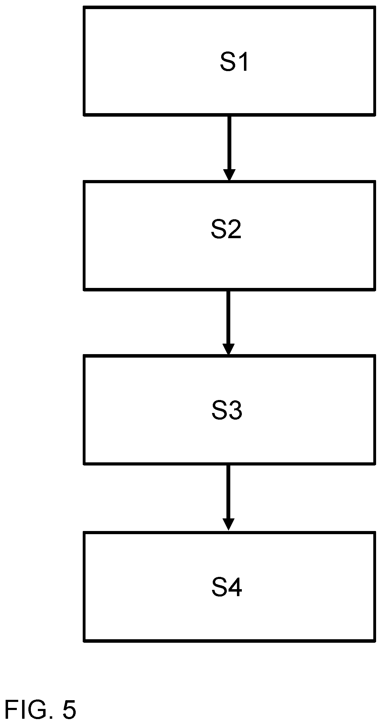

Figur 5 zeigt ein Ausführungsbeispiel des erfindungsgemäßen Verfahrens anhand eines Flussdiagramms umfassend die folgenden Schritte.

S1: Bereitstellen einer Außenscheibe 1, einer Innenscheibe 2 und mindestens einer thermoplastischen Folie zur Ausbildung der thermoplastischen Zwischenschicht 3;

S2: Aufbringen einer erfindungsgemäßen Sonnenschutzbeschichtung auf die Innenfläche II der Außenscheibe 1 oder auf die Außenfläche der Innenscheibe 2, beispielsweise mittels Kathodenzerstäubung;

S3: optionales Aufbringen einer Wärmeschutzbeschichtung 5 auf die Innenseite IV der Innenscheibe 2;

S4: Verbinden der Außenscheibe 1 und der Innenscheibe 2 über die thermoplastische Zwischenschicht 3 zur Verbundscheibe 100.

In einer Ausführungsform werden als Außenscheibe 1 und als Innenscheibe 2 Glasscheiben eingesetzt. In einer bevorzugten Ausführungsform des Verfahrens wird die Sonnenschutzbeschichtung 4 mit den mindestens drei funktionellen Silberschichten Ag1, Ag 2 und Ag3 und den mindestens vier dielektrischen Modulen M1, M2, M3 und M4 auf die Innenseite II der Außenscheibe 1, bevorzugt mittels magnetfeldunterstützter Kathodenzerstäubung aufgebracht. Das Aufbringen der Sonnenschutzbeschichtung 4 kann zeitlich vor, zeitlich nach oder gleichzeitig mit dem optionalen Aufbringen der Wärmestrahlen-reflektierenden Beschichtung 5 auf die Innenseite IV der Innenscheibe 2 erfolgen. Das Verbinden von Außenscheibe 1 und Innenscheibe 2 über die Zwischenschicht zum Verbundglas erfolgt bevorzugt, nachdem sowohl die Sonnenschutzbeschichtung 4 als auch die optionale Wärmeschutzbeschichtung 5 aufgebracht worden sind.

Beispiele

Alle optischen, ästhetischen und energetischen Eigenschaften der Verbundscheiben wurden in laminiertem Zustand gemessen, beziehungsweise für eine laminierte Verbundscheibe berechnet. In den Beispielen wurde die Sonnenschutzbeschichtung 4 auf die Innenseite II einer klaren Außenscheibe 1 (Beispiel Planiclear) aufgebracht. Eine getönte PVB-Folie wurde in der Zwischenschicht verwendet. Die Low-E-Beschichtung wurde auf der Innenseite IV einer dunkel getönten Innenscheibe 2 (Beispiel VG10) aufgebracht. Die Low-E-Beschichtung wies eine Emissivität von 30% auf. Die Low-E-Beschichtung basiert auf einer ITO (IndiumZinnOxid) Schicht, die zwischen dielektrischen Schichten $(Si_3N_4, SiO)$ eingekapselt sind.

Das Beispiele 1 und das Vergleichsbeispiel 1 wurden durch Computer-Simulation erhalten. Die erfindungsgemäßen Beispiele A bis E wurden als Verbundscheibe (Dachscheibe für ein Fahrzeug) mit den angegebenen Sonnenschutzbeschichtungen hergestellt.

Für jedes Beispiel werden die Stapel-Struktur der Sonnenbeschichtung (Schichten und Schichtdicken), sowie die optischen Eigenschaften der Beschichtung in der fertiggestellten Verbundscheibe angegeben.

Beispiel 1 und Vergleichsbeispiel 1 (jeweils Computer simuliert)

Die Schichtfolgen der Sonnenschutzbeschichtungen und die Schichtdicken sind in Tabelle 1 dargestellt. Die relativen Schichtdicken der Silberschichten und der dielektrischen Module, sowie die Werte zu den optischen und energetischen Eigenschaften sind in Tabelle 2 und Tabelle 3 wiedergegeben.

Es bedeuten:

RE energetische Reflexion [%]
RLext sichtbare externe Reflexion [%]
TL sichtbare Lichttransmission [%]
TTS totale transmittierte Wärmestrahlung [%]
RL bei 60° sichtbare Reflexion bei einem Betrachtungswinkel von 60[%]

RLint sichtbare interne Reflexion [%]

L*, a*, b* Farbkoordinaten (Farbraum CIE, International Commision on Illumination)

Die Werte für die Lichttransmission (TL) und die Reflexion (RL) beziehen sich auf die Lichtart A, das heißt den sichtbaren Anteil des Sonnenlichts bei einer Wellenlänge von 380 nm bis 780 nm.

Tabelle 1

| Schichtabfolge | Schichtmaterial | Beispiel 1 Schichtdicke [nm] | Vergleichsbeispiel1 Schichtdicke [nm] |
|---|---|---|---|
| Außenscheibe 1 | Glass | | |
| Erstes dielektrisches Modul M1 | Si3N4 | 21,2 | 10,1 |
| | ZnO | 7 | 7 |
| Blockerschicht | NiCr | 0.2 | 0,2 |
| Erste Silberschicht Ag1 | Ag | 17,8 | 11,1 |
| Blockerschicht | NiCr | 0,1 | 0 |
| Zweites dielektrisches Modul M2 | ZnO | 7 | 7 |
| | Si3N4 | 69,9 | 63,6 |
| | ZnO | 7 | 7 |
| Blockerschicht | NiCr | 0,1 | 0,6 |
| Zweite Silberschicht Ag2 | Ag | 9, | 11,8 |
| Blockerschicht | NiCr | 0,2 | 0,7 |
| Drittes dielektrisches Modul M3 | ZnO | 7 | 7 |
| | Si3N4 | 35,1 | 45,9 |
| | ZnO | 7 | 7 |
| Blockerschicht | NiCr | 0,1 | 0,4 |
| Dritte Silberschicht Ag3 | Ag | 7,6 | 10,6 |
| Blockerschicht | NiCr | 0,2 | 0,2 |
| Viertes dielektrisches Modul M4 | ZnO | 7 | 7 |
| | Si3N4 | 15,4 | 12,2 |

Tabelle 2 Relative Schichtdicken in der Sonnenschutzbeschichtung

| | Beispiel 1 | Vergleichsbeispiel 1 |
|---|---|---|
| Ag1/Ag2 | 1.98 | 0.94 |
| Ag2/Ag3 | 1.18 | 1.11 |
| Ag1/Ag3 | 2.34 | 1.05 |
| M2/M1 | 2.98 | 4.55 |
| M2/M3 | 1.71 | 1.30 |
| M2/M4 | 3.75 | 4.05 |

Tabelle 3 Energetische und optische Parameter der Verbundscheibe mit der Sonnenschutzbeschichtung.

| | Beispiel 1 | Vergleichsbeispiel1 |
|---|---|---|
| RE | 48.5 | 40.4 |
| RLext | 21.7 | 9.6 |
| TL | 4.8 | 4.7 |
| TTS | 12.4 | 14 |
| Äußere Farbe | grün | grün |
| Farbe bei 60° | blau | Rot/blau |
| RL bei 60° | 23.1 | 13.4 |
| RLint | 2.7 | 2.6 |

Beispiele A bis E

Die Schichtfolgen der Sonnenschutzbeschichtungen und die Schichtdicken der Beispiele A bis E sind in Tabelle 5 dargestellt. Die relativen Schichtdicken der Silberschichten und der dielektrischen Module, sowie die Werte zu den optischen und energetischen Eigenschaften sind in Tabelle 6 und Tabelle 7 wiedergegeben.

Tabelle 5

| | | Schichtdicken [nm] | | | | |
|---|---|---|---|---|---|---|
| Schichtabfolge | Schichtmaterial | Beispiel A | Beispiel B | Beispiel C | Beispiel D | Beispiel E |
| Außenscheibe 1 | Glas | | | | | |
| Erstes dielektrisches Modul M1 | SiNx | 8,0 | 10,6 | 9,0 | 16,4 | 7,9 |
| | ZnSnOx | 8,0 | 8,0 | 8,0 | 8,0 | 8,1 |
| | ZnO | 10,0 | 10,0 | 10,0 | 10,0 | 12,3 |
| Erste Silberschicht Ag1 | Ag | 15,8 | 19,0 | 16,5 | 17,8 | 13,3 |
| Blockerschicht | NiCr | 0,2 | 0,2 | 0,2 | 0,2 | 0,2 |
| Zweites dielektrisches Modul M2 | ZnO | 10,0 | 10,0 | 10,0 | 10,0 | 15,0 |
| | SiNx | 52,0 | 39,2 | 52,0 | 46,0 | 37,9 |
| | ZnSnOx | 8,0 | 8,0 | 8,0 | 8,0 | 9,3 |
| | ZnO | 10,0 | 10,0 | 10,0 | 10,0 | 13,5 |
| Zweite Silberschicht Ag2 | Ag | 12,3 | 10,6 | 14,3 | 10,8 | 12,1 |
| Blockerschicht | NiCr | 0,2 | 0,2 | 0,2 | 0,2 | 0,8 |
| Drittes dielektrisches Modul M3 | ZnO | 10,0 | 10,0 | 10,0 | 10,0 | 13,0 |
| | SiNx | 38,5 | 21,5 | 39,5 | 27,0 | 30,5 |
| | ZnSnOx | 8,0 | 8,0 | 8,0 | 8,0 | 9,1 |
| | ZnO | 10,0 | 10,0 | 10,0 | 10,0 | 14,2 |
| Dritte Silberschicht Ag3 | Ag | 9,5 | 10,0 | 8,5 | 8,3 | 9,9 |
| Blockerschicht | NiCr | 0,2 | 0,2 | 0,2 | 0,2 | 0,2 |
| Viertes dielektrisches Modul M4 | ZnO | 10,0 | 10,0 | 10,0 | 10,0 | 16,8 |
| | SiNx | 22,5 | 20,0 | 35,6 | 20,3 | 18,7 |

Tabelle 6 Relative Schichtdicken in der Sonnenschutzbeschichtung der gefertigten Verbundscheiben der Beispiele A bis E

|  | A | B | C | D | E |
|---|---|---|---|---|---|
| Ag1/Ag2 | 1.28 | 1.79 | 1.15 | 1.65 | 1.10 |
| Ag2/Ag3 | 1.29 | 1.06 | 1.68 | 1.30 | 1.22 |
| Ag1/Ag3 | 1.66 | 1.90 | 1.94 | 2.14 | 1.34 |
| M2/M1 | 3.12 | 2.36 | 3.00 | 2.16 | 2.57 |
| M2/M3 | 1.21 | 1.37 | 1.19 | 1.36 | 1.13 |
| M2/M4 | 2.47 | 2.24 | 1.75 | 2.45 | 2.30 |

Tabelle 7 Energetische und optische Parameter der Verbundscheiben aus Beispiel A bis E

|  | A | B | C | D | E |
|---|---|---|---|---|---|
| TL | 5,4 | 5,2 | 5,6 | 5,3 | 6,2 |
| RL1 | 20,9 | 20,0 | 19,3 | 20,5 | 11,8 |
| a*R 8° | -0,9 | -12,6 | -8,5 | -10,0 | -5,0 |
| b*R 8° | -9,8 | -4,6 | -18,8 | -11,1 | -10,5 |
| RL 60° | 21,5 | 22,0 | 18,9 | 20,9 | 15,5 |
| a*R 60° | -3,2 | -3,3 | -3,2 | -4,2 | -3,3 |
| b*R 60° | -8,2 | -6,9 | -18,9 | -12,4 | -8,4 |
| RE | 45,6 | 50,7 | 47,6 | 48,5 | 45,3 |
| TTS | 13,7 | 12,2 | 13,2 | 12,9 | 13,8 |
| Ext color | blau | grün | blau | grün | blau |
| Color @60° | blue | blue | blue | blue | blue |

Tabelle 8 Relative Schichtdicken in der Sonnenschutzbeschichtung der gefertigten Verbundscheiben im Vergleichsbeispiel V2

| Vergleichsbeispiel | V2 |
|---|---|
| Ag1/Ag2 | 1.14 |
| Ag2/Ag3 | 1.08 |
| Ag1/Ag3 | 1.23 |
| M2/M1 | 2.85 |
| M2/M3 | 0.96 |
| M2/M4 | 2.14 |

Tabelle 9 Energetische und optische Parameter der Verbundscheiben gemäß dem Vergleichsbeispiel V2

| Vergleichsbeispiel | V2 |
|---|---|
| TL | 5.9 |
| RLext | 13.3 |
| RL 60° | 20.1 |

(fortgesetzt)

| Vergleichsbeispiel | V2 |
|---|---|
| TTS | 12.4 |
| Äußere Farbe | gelb |
| Farbe bei 60° | orange |

Erfindungsgemäß werden Verbundscheiben mit einer erfindungsgemäß aufgebauten Sonnenschutzbeschichtung bereitgestellt, die hinsichtlich der energetischen Performance, des thermischen und des visuellen Komforts und gleichzeitig hinsichtlich des ästhetischen Erscheinungsbilds verbessert und gegenüber bekannten Verbundscheiben mit Sonnenschutzbeschichtungen weiter optimiert werden konnten. Es konnte eine energetische Reflexion von RE >36%, bevorzugt von RE>39 % erzielt werden. Mit der erfindungsgemäßen Sonnenschutzbeschichtung können in Verbindung mit einer Wärmerstrahlen-reflektierenden Beschichtung Verbundscheiben bereitgestellt werden, die zusätzlich eine besonders niedrige totale transmittierte Wärmestrahlung (TTS) von weniger als 14 %, insbesondere auch weniger als 13% aufweisen können, wobei gleichzeitig ein optimales ästhetisches Erscheinungsbild ohne unerwünschte Farbtöne in der Reflexion der Verbundscheibe erzielt werden kann. Insbesondere können unerwünschte rote und gelbe Reflexionen oder Trübungen der Verbundscheibe vermieden werden. Es kann erfindungsgemäß im Wesentlichen eine konstante, gewünschte Farbreflexion der Verbundscheibe unabhängig vom Betrachtungswinkel erzielt werden.

Bezugszeichenliste

1 Außenscheibe
2 Innenscheibe
3 thermoplastische Zwischenschicht
3a erste thermoplastische Folie
3b zweite thermoplastische Folie
4 Sonnenschutzbeschichtung
5 Wärmeschutzbeschichtung
6 Trägerfolie
I Außenfläche von 1
II Innenfläche von 1
III Außenfläche von 2
IV Innenfläche von 2
Ag1 erste Silberschicht
Ag2 zweite Silberschicht
Ag3 dritte Silberschicht
M1 erstes dielektrisches Modul
M2 zweite dielektrisches Modul
M3 drittes dielektrisches Modul
M4 viertes dielektrisches Modul
B Blockerschicht
B1 erste Blockerschicht
B2 zweite Blockerschicht
B3 dritte Blockerschicht

**Patentansprüche**

1. Verbundscheibe (100), umfassend eine Außenscheibe (1) mit einer außenseitigen Oberfläche (I) und einer innenseitigen Oberfläche (II), eine Innenscheibe (2) mit einer außenseitigen Oberfläche (III) und einer innenseitigen Oberfläche (IV) und eine thermoplastische Zwischenschicht (3), welche die innenseitige Oberfläche (II) der Außenscheibe (1) mit der außenseitigen Oberfläche (III) der Innenscheibe (2) verbindet, wobei die Verbundscheibe (100) zwischen der Außenscheibe (1) und der Innenscheibe (2) mindestens eine Sonnenschutzbeschichtung (4) aufweist, **dadurch gekennzeichnet, dass**

die Sonnenschutzbeschichtung (4) aus Richtung der Außenscheibe (1) eine Schichtabfolge

- erstes dielektrisches Modul (M1),
- erste Silberschicht (Ag1),
- zweites dielektrisches Modul (M2),
- zweite Silberschicht (Ag2),
- drittes dielektrisches Modul (M3),
- dritte Silberschicht (Ag3),
- viertes dielektrisches Modul (M4) umfasst,

wobei die Silberschichten (Ag1, Ag2, Ag3) zueinander eine relative Schichtdicke von Ag1/Ag2>1 und Ag1/Ag3>1, aufweisen und die dielektrischen Module (M1, M2, M3, M4) eine relative Schichtdicke von M2/M1>1, M2/M3>1 und M2/M4 >1 aufweisen.

2. Verbundscheibe (100) nach Anspruch 1 **dadurch gekennzeichnet, dass** die Silberschichten der Sonnenschutzbeschichtung (Ag1, Ag2, Ag3) eine relative Schichtdicke von Ag1/Ag2 >1 und 1<Ag1/Ag3<3 aufweisen.

3. Verbundscheibe (100) nach einem der Ansprüche 1 oder 2 **dadurch gekennzeichnet, dass** die zweite und die dritte Silberschicht (Ag2, Ag3) der Sonnenschutzbeschichtung (4) eine relative Schichtdicke von 0,5<Ag2/Ag3<2.0 aufweisen.

4. Verbundscheibe nach einem der Ansprüche 1 bis 3 **dadurch gekennzeichnet, dass** die dielektrischen Module (M1, M2, M3, M4) eine relative Schichtdicke M2/M1>1, M2/M3>1,1 und M2/M4 >1,5 aufweisen.

5. Verbundscheibe (100) nach einem der Ansprüche 1 bis 4 **dadurch gekennzeichnet, dass** die dielektrischen Module (M1, M2, M3, M4) mindestens eine Nitrid-Schicht, insbesondere eine Siliziumnitrid-Schicht aufweisen.

6. Verbundscheibe (100) nach einem der Ansprüche 1 bis 5 **dadurch gekennzeichnet, dass** die Schichtabfolge der Sonnenschutzbeschichtung (4), bevorzugt in Kontakt mit einer der Silberschichten (Ag1, Ag2, Ag3), mindestens eine Blockerschicht (B) enthält.

7. Verbundscheibe nach einem der Ansprüche 1 bis 6 **dadurch gekennzeichnet, dass** die Sonnenschutzbeschichtung (4) auf der innenseitigen Oberfläche (II) der Außenscheibe (1) oder auf der außenseitigen Oberfläche (III) der Innenscheibe (2) aufgebracht ist oder dass die Sonnenschutzbeschichtung (4) in die Zwischenschicht (3) eingebracht ist.

8. Verbundscheibe nach einem der Ansprüche 1 bis 7 **dadurch gekennzeichnet, dass** die thermoplastische Zwischenschicht (3) eine Trägerfolie (6) enthält, welche die Sonnenschutzbeschichtung (4) aufweist.

9. Verbundscheibe nach einem der Ansprüche 1 bis 8 **dadurch gekennzeichnet, dass** die Verbundglasscheibe eine externe energetische Reflexion RE > 36% aufweist.

10. Verbundscheibe nach einem der Ansprüche 1 bis 9 **dadurch gekennzeichnet, dass** die sichtbare externe Reflexion RLext > 8% beträgt.

11. Verbundscheibe nach einem der Ansprüche 1 bis 10 **dadurch gekennzeichnet, dass** auf der innenseitigen Oberfläche (IV) der Innenscheibe (2) eine Wärmestrahlen-reflektierende Beschichtung (5) aufgebracht ist.

12. Verbundscheibe nach Anspruch 11 **dadurch gekennzeichnet, dass** die Wärmestrahlen-reflektierende Beschichtung (5) eine funktionelle Schicht basierend auf Indiumzinnoxid-Schicht (ITO) oder eine Zinnoxid-Schicht (SnO2) aufweist, wobei die Indiumzinnoxid-Schicht oder die Zinnoxid-Schicht zwischen zwei dielektrischen Schichten angeordnet ist.

13. Verbundscheibe nach einem der Ansprüche 11 oder 12 **dadurch gekennzeichnet, dass** die Wärmestrahlen-reflektierende Beschichtung eine Emissivität von höchstens 50%, bevorzugt höchstens 30 % aufweist.

14. Verfahren zur Herstellung einer Verbundscheibe (100) nach einem der Ansprüche 1 bis 13, umfassend die Verfahrensschritte

- Aufbringen einer Sonnenschutzbeschichtung (4) auf die innenseitige Oberfläche (II) der Außenscheibe (1), oder auf die außenseitige Oberfläche (III) der Innenscheibe (2), oder Einbringen der Sonnenschutzbeschichtung (4) in die thermoplastische Zwischenschicht (3);
- Verbinden der Außenscheibe (1) und der Innenscheibe (2) über die thermoplastische Zwischenschicht (3).

15. Verfahren zur Herstellung einer Verbundscheibe (100) nach Anspruch 14, **dadurch gekennzeichnet, dass** auf die innenseitige Oberfläche (IV) der Innenscheibe (2) eine Wärmestrahlen-reflektierende Beschichtung (5) aufgebracht wird.

16. Verwendung der Verbundscheibe (100) nach einem der Ansprüche 1 bis 13 in Fortbewegungsmitteln für den Verkehr auf dem Lande, in der Luft oder zu Wasser, insbesondere in Kraftfahrzeugen, beispielsweise als Windschutzscheibe, Heckscheibe, Seitenscheibe und/oder Dachscheibe, sowie als funktionales Einzelstück, und in Gebäuden.

**Claims**

1. Composite pane (100), comprising an outer pane (1) having an exterior-side surface (I) and an interior-side surface (II), an inner pane (2) having an exterior-side surface (III) and an interior-side surface (IV), and a thermoplastic intermediate layer (3) that joins the interior-side surface (II) of the outer pane (1) to the exterior-side surface (III) of the inner pane (2), the composite pane (100) having, between the outer pane (1) and the inner pane (2), at least one solar protection coating (4), **characterized in that**

   the solar protection coating (4) comprises, from the direction of the outer pane (1), a layer sequence of

   - first dielectric module (M1),
   - first silver layer (Ag1),
   - second dielectric module (M2),
   - second silver layer (Ag2),
   - third dielectric module (M3),
   - third silver layer (Ag3),
   - fourth dielectric module (M4),

   the silver layers (Ag1, Ag2, Ag3) have a layer thickness relative to one another of Ag1/Ag2>1 and Ag1/Ag3>1, and the dielectric modules (M1, M2, M3, M4) have a relative layer thickness of M2/M1>1, M2/M3>1, and M2/M4>1.

2. Composite pane (100) according to claim 1, **characterized in that** the silver layers of the solar protection coating (Ag1, Ag2, Ag3) have a relative layer thickness of Ag1/Ag2 >1 and 1<Ag1/Ag3<3.

3. Composite pane (100) according to either of claims 1 and 2, **characterized in that** the second and the third silver layer (Ag2, Ag3) of the solar protection coating (4) have a relative layer thickness of 0.5<Ag2/Ag3<2.0.

4. Composite pane according to any of claims 1 to 3, **characterized in that** the dielectric modules (M1, M2, M3, M4) have a relative layer thickness M2/M1>1, M2/M3>1.1, and M2/M4>1.5.

5. Composite pane (100) according to any of claims 1 to 4, **characterized in that** the dielectric modules (M1, M2, M3, M4) have at least one nitride layer, in particular a silicon nitride layer.

6. Composite pane (100) according to any of claims 1 to 5, **characterized in that** the layer sequence of the solar protection coating (4) contains at least one blocking layer (B), preferably in contact with one of the silver layers (Ag1, Ag2, Ag3).

7. Composite pane according to any of claims 1 to 6, **characterized in that** the solar protection coating (4) is applied on the interior-side surface (II) of the outer pane 1 or on the exterior-side surface (III) of the inner pane (2), **or in that** the solar protection coating (4) is introduced into the intermediate layer (3).

8. Composite pane according to any of claims 1 to 7, **characterized in that** the thermoplastic intermediate layer (3) contains a carrier film (6) that has the solar protection coating (4).

9. Composite pane according to any of claims 1 to 8, **characterized in that** the composite glass pane has external energy reflection RE > 36%.

10. Composite pane according to any of claims 1 to 9, **characterized in that** the visible external reflection RLext is > 8%.

11. Composite pane according to any of claims 1 to 10, **characterized in that** a thermal-radiation-reflecting coating (5) is applied on the interior-side surface (IV) of the inner pane (2).

12. Composite pane according to claim 11, **characterized in that** the thermal-radiation-reflecting coating (5) has a functional layer based on an indium tin oxide layer (ITO) or a tin oxide layer (SnO2), the indium tin oxide layer or the tin oxide layer being arranged between two dielectric layers.

13. Composite pane according to either of claims 11 and 12,
**characterized in that** the thermal-radiation-reflecting coating has emissivity of at most 50%, preferably at most 30%.

14. Method for producing a composite pane (100) according to any of claims 1 to 13 comprising the method steps of

- applying a solar protection coating (4) on the interior-side surface (II) of the outer pane (1), or on the exterior-side surface (III) of the inner pane (2), or introducing the solar protection coating (4) into the thermoplastic intermediate layer (3);
- joining the outer pane (1) and the inner pane (2) via the thermoplastic intermediate layer (3).

15. Method for producing a composite pane (100) according to claim 14, **characterized in that** a thermal-radiation-reflecting coating (5) is applied on the interior-side surface (IV) of the inner pane (2).

16. Use of the composite pane (100) according to any of claims 1 to 13 in means of locomotion for travel on land, in the air, or on water, in particular in motor vehicles, for example, as a windshield, rear window, side window, and/or roof panel, and as a functional individual piece, and in buildings.


**Revendications**

1. Vitrage feuilleté (100) comprenant une vitre extérieure (1) comportant une surface côté extérieur (I) et une surface côté intérieur (II), une vitre intérieure (2) comportant une surface côté extérieur (III) et une surface côté intérieur (IV) et une couche intermédiaire (3) thermoplastique qui relie la surface côté intérieur (II) de la vitre extérieure (1) à la surface côté extérieur (III) de la vitre intérieure (2), le vitrage feuilleté (100) présentant au moins un revêtement de protection solaire (4) entre la vitre extérieure (1) et la vitre intérieure (2), **caractérisé en ce que**

le revêtement de protection solaire (4) comprend, à partir de la vitre extérieure (1), une succession de couches avec

- un premier module diélectrique (M1),
- une première couche d'argent (Ag1),
- un deuxième module diélectrique (M2),
- une deuxième couche d'argent (Ag2),
- un troisième module diélectrique (M3),
- une troisième couche d'argent (Ag3),
- un quatrième module diélectrique (M4),

les couches d'argent (Ag1, Ag2, Ag3) présentant entre elles une épaisseur de couche relative de Ag1/Ag2 > 1 et Ag1/Ag3 > 1, et les modules diélectriques (M1, M2, M3, M4) présentant une épaisseur de couche relative de M2/M1 > 1, M2/M3 > 1 et M2/M4 > 1.

2. Vitrage feuilleté (100) selon la revendication 1, **caractérisé en ce que** les couches d'argent du revêtement de protection solaire (Ag1, Ag2, Ag3) présentent une épaisseur de couche relative de Ag1/Ag2 > 1 et 1 < Ag1/Ag3 < 3.

**3.** Vitrage feuilleté (100) selon l'une des revendications 1 ou 2, **caractérisé en ce que** la deuxième et la troisième couche d'argent (Ag2, Ag3) du revêtement de protection solaire (4) présentent une épaisseur de couche relative de 0,5 < Ag2/Ag3 < 2,0.

**4.** Vitrage feuilleté selon l'une des revendications 1 à 3, **caractérisé en ce que** les modules diélectriques (M1, M2, M3, M4) présentent une épaisseur de couche relative M2/M1 > 1, M2/M3 > 1,1 et M2/M4 > 1,5.

**5.** Vitrage feuilleté (100) selon l'une des revendications 1 à 4 **caractérisé en ce que** les modules diélectriques (M1, M2, M3, M4) présentent au moins une couche de nitrure, en particulier une couche de nitrure de silicium.

**6.** Vitrage feuilleté (100) selon l'une des revendications 1 à 5, **caractérisé en ce que** la succession de couches du revêtement de protection solaire (4) contient au moins une couche de blocage (B), de préférence en contact avec l'une des couches d'argent (Ag1, Ag2, Ag3).

**7.** Vitrage feuilleté selon l'une des revendications 1 à 6, **caractérisé en ce que** le revêtement de protection solaire (4) est appliqué sur la surface côté intérieur (II) de la vitre extérieure 1 ou sur la surface côté extérieur (III) de la vitre intérieure (2) ou **en ce que** le revêtement de protection solaire (4) est intégré dans la couche intermédiaire (3).

**8.** Vitrage feuilleté selon l'une des revendications 1 à 7, **caractérisé en ce que** la couche intermédiaire (3) thermoplastique contient un film de support (6) qui présente le revêtement de protection solaire (4).

**9.** Vitrage feuilleté selon l'une des revendications 1 à 8, **caractérisé en ce que** le vitrage en verre feuilleté présente une réflexion énergétique externe RE > 36 %.

**10.** Vitrage feuilleté selon l'une des revendications 1 à 9, **caractérisé en ce que** la réflexion externe visible RLext est > 8 %.

**11.** Vitrage feuilleté selon l'une des revendications 1 à 10, **caractérisé en ce qu'**un revêtement réfléchissant le rayonnement thermique (5) est appliqué sur la surface côté intérieur (IV) de la vitre intérieure (2).

**12.** Vitrage feuilleté selon la revendication 11, **caractérisé en ce que** le revêtement réfléchissant le rayonnement thermique (5) présente une couche fonctionnelle à base de couche d'oxyde d'indium-étain (ITO) ou une couche d'oxyde d'étain (SnO2), la couche d'oxyde d'indium-étain ou la couche d'oxyde d'étain étant disposée entre deux couches diélectriques.

**13.** Vitrage feuilleté selon l'une des revendications 11 ou 12, **caractérisé en ce que** le revêtement réfléchissant le rayonnement thermique présente une émissivité d'au plus 50 %, de préférence d'au plus 30 %.

**14.** Procédé de production d'un vitrage feuilleté (100) selon l'une des revendications 1 à 13, comprenant les étapes de procédé suivantes

- application d'un revêtement de protection solaire (4) sur la surface côté intérieur (II) de la vitre extérieure (1), ou sur la surface côté extérieur (III) de la vitre intérieure (2), ou insertion du revêtement de protection solaire (4) dans la couche intermédiaire (3) thermoplastique ;
- liaison de la vitre extérieure (1) et de la vitre intérieure (2) par l'intermédiaire de la couche intermédiaire (3) thermoplastique.

**15.** Procédé de production d'un vitrage feuilleté (100) selon la revendication 14, **caractérisé en ce qu'**un revêtement réfléchissant le rayonnement thermique (5) est appliqué sur la surface côté intérieur (IV) de la vitre intérieure (2).

**16.** Utilisation du vitrage feuilleté (100) selon l'une des revendications 1 à 13 dans des moyens de déplacement pour la circulation terrestre, aérienne ou maritime, en particulier dans des véhicules automobiles, par exemple en tant que pare-brise, lunette arrière, vitre latérale et/ou vitre de toit, ainsi qu'en tant que pièce unique fonctionnelle, et dans des bâtiments.

FIG. 1

FIG. 2

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19927683 C1
- WO 2013127563 A1
- WO 2019206493 A1
- WO 2019110172 A1
- WO 2013131667 A1